(19) Europäisches Patentamt
European Patent Office
Office européen des brevets

(11) **EP 3 819 238 A1**

(12) **EUROPEAN PATENT APPLICATION**

(43) Date of publication:
**12.05.2021 Bulletin 2021/19**

(51) Int Cl.:
***B65G 53/52*** *(2006.01)*

(21) Application number: **19218890.2**

(22) Date of filing: **20.12.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **11.11.2019 EP 19208252**

(71) Applicant: **University of Limerick**
**Limerick V94 T9PX (IE)**

(72) Inventors:
• OLALEYE, Akeem
Limerick (IE)
• WALKER, Gavin
Limerick (IE)
• VAN DEN AKKER, Harry
Limerick (IE)

(74) Representative: **Barker Brettell LLP**
**100 Hagley Road**
**Edgbaston**
**Birmingham B16 8QQ (GB)**

(54) **PIPE SECTION WITH BEND**

(57)     A pipe section (1) for carrying cohesive powders, the pipe section (1) formed of a boundary wall (3) defining a passage (5) and including a plurality of pipe portions (13, 15, 17, 19), the pipe portions (13, 15, 17, 19) comprising, in series: an inlet portion (13) in which the passage (5) substantially extends along a first axis (21); a corner portion (15) defining a bend (29) within which the passage (5) turns from extending along the first axis (21), to extending along a second axis (35) different to the first axis (21), the corner portion (15) defining an inner side (39) of the bend (29) and an opposing outer side (37) of the bend (29); a deflection portion (17) to disperse agglomerations (57) of powder (7) formed in the passage (5) at the corner portion (15) by directing agglomerated material (57) from the outer side (37) of the bend (29) towards the centre of the passage (5); and an outlet portion (19) substantially extending along the second axis (35).

FIG. 2

EP 3 819 238 A1

**Description**

The present disclosure relates to a pipe section for carrying cohesive powders. In particular, the present disclosure relates to a corner section of pipe. The pipe section may prevent agglomeration of the cohesive powder.

When transporting cohesive powder, such as dairy powders, through pneumatic conveying systems, there is variability in the behaviour of the powder due to variability in the composition of the powder (i.e. varying degree of milk proteins, fats, lactose etc.). This can lead to agglomeration of the powder, causing blockages in pipes. The risk of such blockages is particularly high at bends and direction changing sections, where "ropes" of agglomerated powder can form on the outer side of the bend gradually acting to block the pipe.

The current state-of-the-art pneumatic conveying systems in the dairy industry generally make use of hygienic stainless-steel pipes with long or short radius bends to convey powders. In order to deal with blockages in conveying systems, most dairy powder processing plants use mechanical hammering of the pipes, blockage prevention silos or stop production completely to clear out blocked sections. The resultant effect is increased downtime due to stoppages. In addition to diary powders, blockages caused by particle agglomeration is also an issue for the pharmaceutical industry where cohesive excipients are used, and any other industry which requires the transport of cohesive powders.

According to a first aspect of the invention there is provided a pipe section for carrying cohesive powders, the pipe section formed of a boundary wall defining a passage, and including a plurality of pipe portions, the pipe portions comprising, in series: an inlet portion in which the passage substantially extends along a first axis; a corner portion defining a bend within which the passage turns from extending along the first axis, to extending along a second axis different to the first axis, the corner portion defining an inner side of the bend and an opposing outer side of the bend; a deflection portion to disperse agglomerations of powder formed in the passage at the corner portion by directing agglomerated material from the outer side of the bend towards the centre of the passage; and an outlet portion substantially extending along the second axis.

As cohesive powder is conveyed around a bend in a pipe, the powder tends to agglomerate on the outer side of the pipe. In some cases, the roping of agglomerated (cohesive) powder at the corner can lead to continuous build-up of powder or complete pipe blockage. The deflection portion of the pipe, positioned downstream of the bend, deflects the agglomerated powder away from the outer wall of the pipe, and breaks up the agglomerated powder, reducing the formation of blockages in the pipe. This is achieved by the creation of a recirculation zone in front of the offset.

The deflection portion may comprise a first sub-portion in which the passage deviates from extending along the second axis, in a direction away from the outer side of the bend.

An angle between the centreline of the passage in the first sub-portion and the second axis may be between 15 degrees and 45 degrees. The angle may preferably be between 15 degrees and 25 degrees.

The deflection portion may comprise a second sub-portion, in series after the first sub-portion, in which a centreline of the passage returns to the second axis.

An angle between a centreline of the passage in the second sub-portion and the second axis may be between 15 degrees and 45 degrees. Preferably, the angle may be between 15 degrees and 25 degrees.

The passage may have constant diameter throughout the deflection portion.

The outlet portion may comprise a tapering region having a reducing diameter away from the deflection portion

As particles are conveyed around a bend, the velocity of the particles can be slowed down. The use of a tapering portion downstream of the deflection portion allows re-acceleration of the particles, using the Venturi effect.

The tapering region may be rotationally asymmetric around the second axis.

In the tapering region, an outer portion of the boundary wall, extending from the outer side of the bend, may extend parallel to the second axis.

In the tapering region, an inner portion of the boundary wall, extending from the inner side of the bend, may extend towards the second axis as it extends away from the deflection portion.

A centreline of the passage in the tapering region may extend in a direction away from the inner side of the bend

The tapering region may comprise a first diameter at a first end, and a second diameter at an opposing second end positioned in series after the first end, wherein the ratio of the second diameter to the first diameter is between 0.5 and 0.9. In one embodiment, the ratio may be 0.75

The ratio of the length of the tapering region parallel to the second axis to the first diameter may be between 1.5 and 1.8. In one embodiment, the ratio may be 1.8

The outlet portion may comprise a flange for connecting the pipe section to a downstream adjacent pipe section having larger diameter than a narrow end of the tapering portion.

The inlet portion may comprise a flange for connecting the pipe section to an upstream adjacent pipe section.

The flange of the outlet portion and the flange of the inlet portion may be arranged to connect the pipe section to adjacent upstream and downstream sections having the same diameter.

The inlet portion may comprise a first sub-portion in which the diameter of the passage increases as the passage extends along the first axis, and a second sub-portion, extending between the first sub-portion and the corner portion, in which the diameter of the passage reduces as the passage extends along the first axis.

The provision of an inlet portion that widens and then narrows upstream of the bend can condition the flow prior to the bend, again using the Venturi effect. The section with increasing diameter causes deceleration of the particles prior to the bend, whilst the narrowing provides some re-acceleration to prevent collection of particles at the bend. The conditioning of the flow in this way can reduce the impact of the incoming particles with the wall. This is particularly important when handling friable cohesive powders, such as infant formula, which can be damaged by contact with the wall of the pipe.

The diameter of the passage in the inlet portion at the start of the first sub-portion, in series, is the same as the diameter of the passage at the end of the second sub-portion, in series.

The inlet portion may be asymmetric about the first axis.

A distance between an inner portion of the boundary wall and the first axis may vary along the inlet portion, and an outer portion of the boundary wall may extend parallel to the first axis along the inlet portion

According to a second aspect of the invention, there is provided a pipe section for handling cohesive powder, the pipe section having a bend and, in a downstream direction from the bend, a flow conditioner to direct powder away from the outside wall of the bend, and disperse the agglomerated powder.

According to a third aspect of the invention, there is provided a pneumatic conveying system for conveying cohesive powder, the conveying system including two or more straight sections, extending at different angles to each other, the straight sections being joined by pipe sections according to the first or second aspect.

According to a fourth aspect of the invention, there is provided a method of dispersing agglomerated cohesive powder in a pipe, the method comprising: deflecting agglomerated powder from a boundary wall of the pipe towards the centre of the pipe.

Aspects and embodiments of the invention ensure an even distribution of particles in the pipe cross-section and a reduction in continuous particle-wall frictional interactions within short distance from the bend exit. Aspects and embodiments of the invention reduce the tendency for cohesive particles to form continuous layers of deposits on the downstream pipe walls after the bends (particularly 90-degree bends), preventing pipeline blockage.

Aspects and embodiments of the invention allow cohesive powders to be conveyed effectively without causing friable product degradation, or sticky product build-up, and also reduce particle-wall interactions after undergoing a change in direction from horizontal to vertical or vice versa.

It will be appreciated that any features discussed in relation to any particular aspect can be applied to any other aspect.

Embodiments of the invention will now be described, by way of example only, with reference to the accompanying drawings, in which:

**Figure 1** illustrates a pipe section according to a first embodiment of the invention in side-on view;
**Figure 2** illustrates a CFD-DEM model of a cohesive powdered substance being conveyed through the pipe section of Figure 1;
**Figure 3A** illustrates a pipe section according to a second embodiment of the invention in side-on view;
**Figure 3B** illustrates the pipe section of Figure 3A in perspective view;
**Figure 4** illustrates a CFD-DEM model of a cohesive powdered substance being conveyed through the pipe section of Figure 3A;
**Figure 5A** illustrates a pipe section according to a third embodiment of the invention in side-on view;
**Figure 5B** illustrates the pipe section of Figure 5A in perspective view;
**Figure 6** illustrates a CFD-DEM model comparing a conventional bend and embodiments of the invention; and
**Figure 7** illustrates the dispersion index for various embodiments of the invention.

In the following description, pipe sections for use in a pneumatic conveying system will be described. It will be appreciated that the pipe sections discussed below may be made of any suitable material, such as (but not limited to) stainless steel. The pipe section may be any suitable diameter, and may be sized and shaped to connect to standardised pneumatic conveying systems. For example, the pipe section may have a diameter between 2 and 4 inches (approx. 5cm to 10cm).

In the below, reference will be made to a centreline of pipe sections, and to diameters of pipe sections.

A pipe section may have any suitable shape cross-section, perpendicular to its length, and the cross-section may vary along the length of the pipe section. At any given position along the length of a pipe section, the person skilled in the art will readily understand how to determine the centre point of the pipe section as being the centre of gravity of the cross-sectional shape. The centreline of the pipe section is considered to be the path extending through the centre-points, along the length of the pipe section.

The diameter of the pipe section at any given position along its length will be considered to be the longest possible straight line extending between opposite sides of the pipe section, perpendicular to and through the centreline.

When referring to the angle of a curved section, it will be appreciated that the angle refers to the angle of a tangent at any particular point on the curve.

At corner sections, the outer side and inner side of the bend/pipe section will be referred to. At the corner section, the outer edge is considered to be line following the longest path along the outside of the pipe section, parallel to the centreline. The inner edge of the pipe section is, conversely, the shortest path along the outside of the pipe section, parallel to the centreline. At any positon along the length of the pipe section, the outer side and inner side are generally defined by bisecting a straight line between the inner edge and outer edge. The inner side is the half of the cross-section towards the inner edge, and the outer side is the half of the cross-section towards the outer edge. It will be appreciated that in the frame of reference of a single corner, the inner and outer edges/sides may be extended downstream or upstream of the bend, to the next corner portion.

Various portions of the pipe will be described as being arranged in series. It will be appreciated that this is simply defined as being along the intended flow direction through the pipe section. Upstream/downstream directions will also be defined with respect to the intended flow direction through the pipe section.

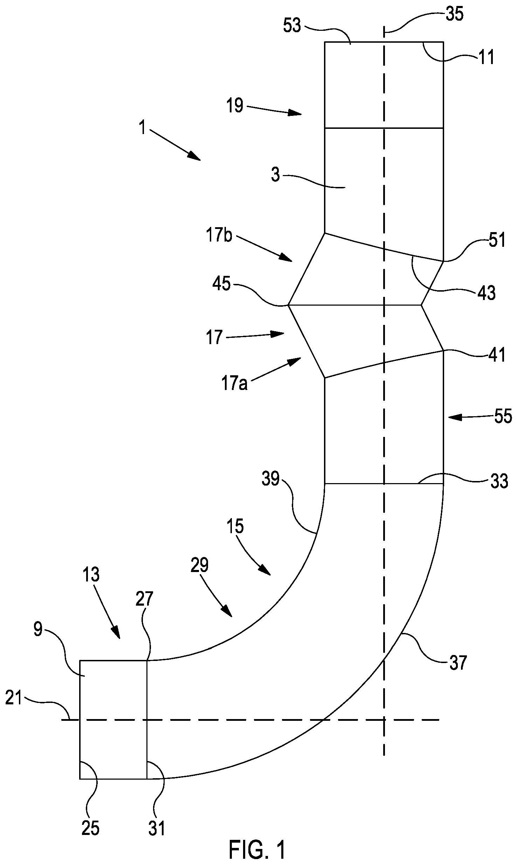

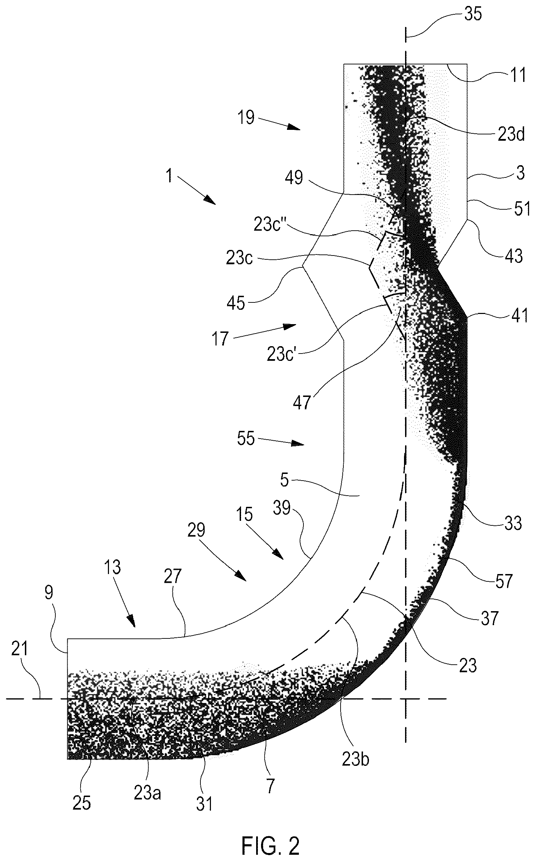

Figure 1 illustrates a first embodiment of a pipe section 1 in side on view. Figure 2 illustrates a sectional view of the pipe section in side view, showing a Computational Fluid Dynamics / Discrete Element Method (CFD/DEM) model of cohesive powder 7 in the pipe section 1. The CFD/DEM model will be discussed below in more detail.

The pipe section 1 is formed by a boundary wall 3 defining a passage 5, through which powder 7 is conveyed. In the example shown, the boundary wall 3 has circular cross-section along the length of the pipe section 1.

The pipe section 1 has an inlet end 9 for coupling to an upstream portion of a conveying system (not shown) and an outlet end 11 for coupling to a downstream portion (not shown). In use, powder 7 is received at the inlet end 9, is conveyed through the passage 5, and provided onwards at the outlet 11.

In series along a flow direction from the inlet end 9, the pipe section 1 includes an inlet portion 13, a corner portion 15, a deflection portion 17 and an outlet portion 19.

Figure 2 illustrates, as a dashed line, the centreline 23 of the passage. The centreline has corresponding portions 23a,b,c,d in the respective portions 13, 15, 17, 19 of the pipe section 1.

In the inlet portion 13, the boundary wall 3 is substantially cylindrical with constant diameter along its length. Therefore, the passage 5 extends in a straight line along a first direction defined by a first axis 21. The portion 23a of the centreline in the inlet portion 13 of the pipe section 1 extends parallel to and on this first axis 21.

A first end 25 of the inlet portion 13 forms the inlet 9 of the pipe section 1. A second end 27 of the inlet portion 13, opposite the first end 25, extends into the corner portion 15.

Within the corner portion 15, the passage 5 extends around a bend 29. At a first end 31 of the corner portion 15, which coincides with the second end 27 of the inlet portion 13, the centreline 23b of the passage 5 is parallel to and along the first axis 21. At the second end 33 of the corner portion 15, opposite the first end 31, the passage 5 extends substantially straight, along a second axis 35. Therefore, through the bend 29, the centreline 23b (and thus the passage 5) turns from extending along the first axis 21 to extending along the second axis 35. In the example shown, the second axis 35 is perpendicular to the first axis 21, so the bend 29 is a 90 degree bend.

Throughout the corner portion 15, the diameter of the passage 5 remains constant. The diameter through the corner portion 15 is the same as the diameter in the inlet portion 13.

As discussed above, the corner portion 15 defines an outer edge/side 37 on the outside of the bend 29 and an inner edge/side 39 on the inside of the bend 29.

Between the corner portion 15, and the deflection portion 17, the centreline 23 of the passage 5 extends straight along the second axis 35, through a straight portion 55. At the deflection portion 17, the centreline 23c of the passage 5 then deviates away from the second axis 25.

As shown in Figures 1 and 2, the deflection portion 17 includes, in series along the intended flow direction, a first sub-portion 17a comprising a cylindrical portion extending away from the outer side 37 of the bend 29, and a second sub portion 17b extending back towards the outer side 37 of the bend 29. The downstream end of the first sub-portion 17a meets the upstream end of the second sub-portion 17b at an apex 45, where the passage 5 turns around from extending away from the second axis 35 to towards it.

The diameter of the boundary wall 3 in the deflection portion 17 is constant. The diameter of the boundary wall 3 is the same as the diameter in the inlet portion 13 and the corner portion 15.

At the upstream end 41 of the deflection portion 17, the centreline 23c of the passage is at the second axis. The sub-portions 17a,b are such that at the downstream end 43 of the deflection portion 17, the centreline 23c returns to the second axis 35. Therefore, the deflection 17 portion may be seen as an "offset" along the centreline 23, the offset extending towards the inner side 39 of the bend 29.

The portion 23c' of the centreline 23 in the first sub-portion 17a of the deflection portion 17 forms a first deflection angle 47 to the second axis 35. The first deflection angle 47 is measured from the second axis 35 to the centreline 23c' in the same direction as the direction of the bend 29 (for example, in the Figures, the turn is anti-clockwise, and the first deflection angle 47 is measured anti-clockwise).

The portion 23c" of the centreline 23 in the second sub-portion 17b of the deflection portion 17 forms a second deflection angle 49 to the second axis 35. The second deflection angle 49 is measured from the second axis 35 to the centreline 23c" in the opposite direction as the direction of the bend 29 (for example, in the Figures, the turn is anti-clockwise, and the second deflection angle 49 is measured clockwise).

The first deflection angle 47 and second deflection angle 49 may be between 15 degrees and 40 degrees. Optionally, the first deflection angle 47 and second deflection angle 49 may be between 15 degrees and 25 degrees

The outlet portion 19 extends from the downstream end 43 of the deflection portion. The outlet portion 19 is substantially cylindrical with constant diameter along its length. Therefore, the passage 5 extending in a straight line along the second axis 35. The portion 23d of the centreline in the outlet portion 19 of the pipe section 1 extends parallel to and on the second axis 35.

A first end 51 of the outlet portion 19 couples to the deflection portion 17. A second end 53 of the outlet portion 13, opposite the first end 51, forms the outlet end 11 of the pipe section 1.

It will be appreciated that where the straight section 55 joins the corner portion 15 and the deflection portion 17 and where the deflection portion 17 joins the outlet portion 19, the outer side 37 of the boundary wall 3 extends for longer along the axial direction than the inner side 39, to ensure the proper joins between the portions 55, 17, 19.

Figure 2 shows a model CFD/DEM model of the particles of powder 7 entering the pipe through inlet 9. The shading of the powder shows the velocity, with darker colours representing relatively slower speeds.

As shown, the powder 7 is initially dispersed as it enters the pipe section 1. Then, as the powder 7 reaches the corner portion 15, it agglomerates towards the outer side 37 of the passage 5.

The offset deflects the agglomerated particles 57 off the pipe wall 3 into the centre of the pipe section, to encourage particle dispersion. A recirculation zone, which forms at or near the deflection portion 17, prevents particle ropes or agglomerated particles 57 from reattachment to the wall 3 for a distance after the offset. In one example, the recirculation zone may be formed in the region of the apex 45, on the inner side of the passage 5.

The height of the deflection portion 17, measured parallel to the second axis 35 from the lowermost point of the first sub-portion 17a to the uppermost point on the second sub-portion may be between 1.2D and 1.8D (where D is the diameter of the pipe). The height of each sub-portion 17a,b (measured parallel to the second axis 35 between the lower/upper-most point and the apex 45) may be between 0.6D and 0.9D.

In the example shown, the first deflection angle 47 and second deflection angle 49 are the same, and the lengths of the first deflection sub-portion 17a and the second deflection sub-portion 17b are the same (measured along the centreline 23c), so the deflection portion 17 is symmetrical about a line of symmetry bisecting the apex 45 perpendicular to the second axis 35. However, it will be appreciated that this need not necessarily be the case. The deflection angles 47, 49 and/or lengths of the first deflection sub-portion 17a and the second deflection sub-portion 17b may be different.

In some cases, the offset in the deflection portion 17 may be arranged such that centreline 23c returns to extending on the second axis 35 at the outlet portion 19. However, by varying the deflection angles 47, 49 and/or lengths of the first deflection sub-portion 17a and the second deflection sub-portion 17b, the centreline 23c may return to a different position, such that the centreline 23d in the outlet portion 19 extends parallel to but offset from the second axis 35.

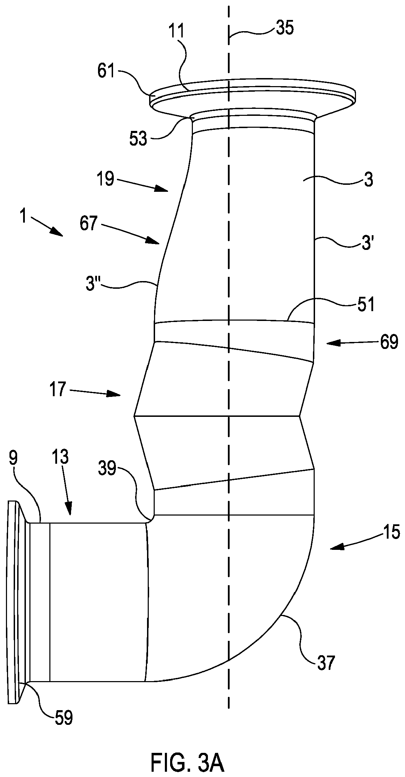

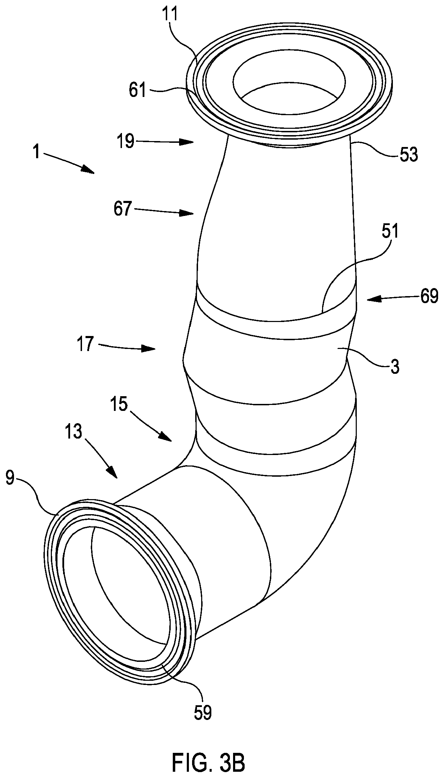

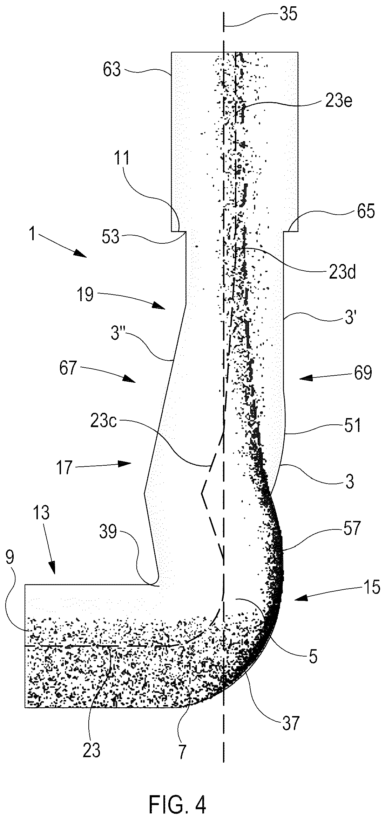

Figures 3A, 3B and 4 illustrate a second embodiment of the invention. Figures 3A and 3B show the pipe section 1 in side and perspective view respectively, whilst Figure 4 shows the pipe section 1, coupled to a downstream pipe section 63, in sectional view of the pipe section in side view, showing a CFD/DEM model of cohesive powder 7 in the pipe section 1.

The second embodiment is a modification of the first embodiment, and is the same as the first embodiment unless stated otherwise. Where features of the first embodiment and the same as the second embodiment, like reference numerals are used.

As in the first embodiment, the pipe section 1 of the second embodiment is formed by a boundary wall 3 defining a passage 5, through which powder 7 is conveyed. As above, the boundary wall 3 has circular cross-section along the length of the pipe section 1, unless stated otherwise.

The pipe section 1 of the second embodiment has, in series along a flow direction, from the inlet end 9, an inlet portion 13, a corner portion 15, a deflection portion 17 and an outlet portion 19 defining the outlet end 11.

As shown in Figures 3A and 3B only, respective connection flanges 59, 61 are formed at the inlet end 9 and outlet end 11. The connection flanges 59, 61 comprise enlarged discs extending radially outward from the boundary wall 3 of the pipe section 1.

In use, the connection flanges 59, 61 can be used to sealingly connect the pipe section 1 to adjacent upstream and downstream pipe sections (not shown). The manner of forming such connections will be known in the art. Furthermore, although the first embodiment is not shown as including such connection flanges 59, 61 they may also be incorporated into the pipe fitting 1 shown in Figure 1.

Apart from the connection flange 59, the inlet portion 13, corner portion 15 and deflection portion 17 of the second embodiment are the same as the first embodiment.

In the pipe section 1 shown in Figures 3A, 3B and the outlet portion 19 extends for a length in a direction parallel to the second axis 35. Along this length, the diameter of the passage 5 narrows from the first end 51 of the outlet portion 19 to the second end 53.

The narrowing is asymmetric around the second axis 35. Therefore, in the example shown, the boundary wall 3' at the outer edge 37 of the pipe section 1 is parallel to the second axis 35 along the length of the outlet portion, whilst the boundary wall 3" at the inner edge 39 tapers inwards. Therefore, the radial distance between the second axis 35 and the sidewall 3 stays the same on the outer side 37 of the outlet portion 19, and reduces along the length of the outlet portion 19 on the inner side 39.

As best shown in Figure 3B, the flange 61 at the outlet end 11 includes an opening that is the same diameter as the passage 5 at the second end 53 of the outlet portion 19. As shown in Figure 4 (which does not show the connection flanges 59, 61), the downstream pipe 63 is of standard diameter, the same as the diameter of the inlet portion 13, corner portion 15, and deflection portion 17. Therefore, at the connection of the pipe section 1 to the downstream pipe 63, a step change 65 in the diameter is formed.

As best shown in Figure 3A, a short straight portion 69 is formed, between the deflection portion 17 and the region 67 in which the outlet portion 19 tapers. The outer side 37 of the boundary wall 3 in this straight portion 69 extends longer along the second axis 35 than the inner side 39, in order to form the connection between the deflection portion 17 and the tapering region 67.

As best shown in Figure 4, the second axis 35 is defined by the direction along which the centreline 23 of the pipe section 1 extends at the exit of the corner portion 15. As in the first embodiment, the centreline 23c is then offset away from and then back to the second axis 35 in the deflection portion 17.

In the straight portion 69, the centreline 23 extends along the second axis 35. In the tapering region 67, the boundary wall 3 is also circular in cross-section. The centre of the cross-sectional shape moves as the passage 5 narrows. Therefore the centreline 23d through the tapering region 67 extends at an angle to the second axis 35. The centreline 23d in the tapering portion 67 generally extends away from the inner side 37 of the bend.

At the end 53 of the outlet portion 19 the centreline 23d of passage 5 is returned to parallel to the second axis 35. However, in the example shown, the centreline 23e in the downstream pipe 63 is now offset from the second axis 35 in a direction perpendicular to the second axis 35 away from the inner side 37 of the bend (i.e. in a turning direction the opposite direction to the bend).

The height of the tapering region 67 is considered to be the length, along the second axis 35 from the point at which the diameter starts to change until the point where the diameter stops changing. The ratio (H/D) of the height H to the diameter D at the start of the tapering region 67 is between 1.5 and 1.8.The ratio (d/D) of the diameter at the end of the tapering region 67 to the diameter D at the start of the tapering region 67 is between 0.5 and 0.9.

Comparison of Figures 2 and 4 shows that the speed of particles of powder 7 is reduced by the deflection portion 17, and then re-accelerated by the tapered region 67 of the outlet portion 19. This acceleration is achieved by the Venturi effect.

In one particular example which incorporates a deflection portion 17 as shown in Figure 1 and an outlet portion 19 as shown in Figure 2, the first and second deflection angles 47, 49 may be 15 degrees, the ratio H/D may be 1.8, and the ratio d/D may be 0.75. In this example, the passage may have an inner diameter of 38 mm. For a short radius and long radius corner, the following dimensions are one example of the size of a pipe section:

TABLE 1 - example parameters for a short and long radius corner.

|  | Short radius | Long radius |
| --- | --- | --- |
| Height of taper region 67 | 60mm | 80mm |
| Height of deflection portion 17 (including straight portions 55, 69) | 60mm | 72mm |
| Longest possible length of deflection region sub portions 17a,b (measured parallel to centreline on outside of wall 3) | 24.11mm | 31.36mm |
| Radius of corner portion 15 measured along outer edge | 52.8mm | 52.8mm |
| Length of inlet portion 13 | 35.9mm | 75.9mm |
| Height from centre line 23a at inlet 9 to centreline 23d at outlet 11 | 160.5mm | 192.5mm |

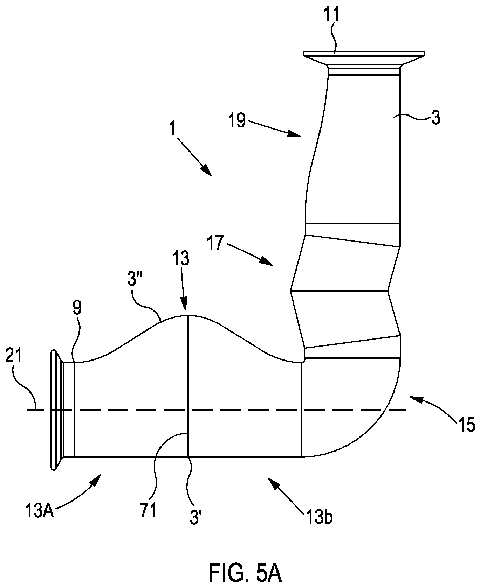

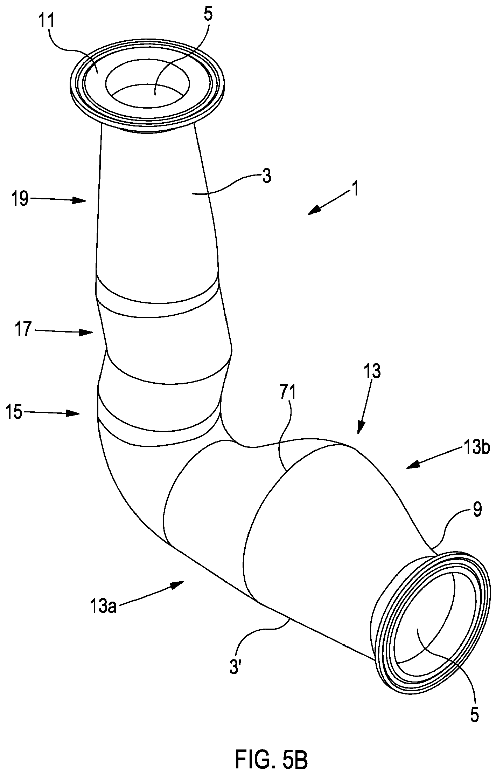

Figures 5A and 5B illustrate a third embodiment of the invention. Figures 5A and 5B show the pipe section 1 in side and perspective view respectively,

The third embodiment is a modification of the second embodiment, and is the same as the second embodiment unless stated otherwise. Where features of the third embodiment and the same as the first or second embodiment, like reference numerals are used.

As in the first and second embodiments, the pipe section 1 of the third embodiment is formed by a boundary wall 3 defining a passage 5, through which powder 7 is conveyed. As above, the boundary wall 3 has circular cross-section along the length of the pipe section 1, unless stated otherwise.

The pipe section 1 of the third embodiment has, in series along a flow direction, from the inlet end 9, an inlet portion 13, a corner portion 15, a deflection portion 17 and an outlet portion 19 defining the outlet end 11.

The corner portion 15, deflection portion 17 and outlet portion 19 of the third embodiment are the same as the second embodiment.

The inlet portion 13 of the third embodiment includes, in series along the intended flow direction, a first sub-portion 13a in which the diameter of the passage 5 expands from the diameter at the inlet end 9 to a waist 71, and a second sub-portion 13b in which the diameter reduces from the waist 71 back to the diameter at the corner portion 15 (which is the same as the diameter at the inlet end 9).

As shown in Figure 5A, the first and second sub-portions 13a are asymmetric about the first axis 21. Within the inlet region 13, the outer portion 3' of the boundary wall 3 remains parallel to the first axis. The expansion and reduction of the diameter is thus achieved by variation towards the inner side 3" of the boundary wall, and through the first and second sub-portions 13a,b, the boundary wall is of circular cross-section.

The ratio (De/D) of the diameter De at the waist 71 to the diameter of the unexpanded pipe (for example at the inlet 9 or at the corner portion 15) D may be between 1.25 and 1.75.

In the example shown in Figures 5A and 5,B, the sub-portions 13a,b of the inlet portion 13 are of equal length along the first axis 21. The ratio (L/D) of the combined length of the two sub-portions 13a,b L to the diameter of the unexpanded pipe (for example at the inlet 9 or at the corner portion 15) D may be between 1.3 and 1.8 depending on the radius length of the bend.

It will be appreciated that in some embodiments, the sub-portions 13a,b may be of unequal length. In such cases, the ratio (Lr/Le) of the length of the second sub-portion (Lr) to the first sub-portion (Le) may be between 0.7 and 2 depending on the radius length of the bend.

When an inlet portion 13 as described in relation to the third embodiment is combined with either of the examples given in table 1, the inlet portion 13 may have a length of 85mm. For a short radius corner, the first sub-portion 13a may be 35mm and the second sub-portion 13b 50mm (measured along the outer edge). For a long radius corner, both sub-portions may be 60mm.

The inlet portion 13 of the third embodiment reduces the impact of the incoming particles 7 with the wall 3 at the bend 29. This is particularly important when handling friable cohesive powders e.g. agglomerated infant formula.

Although Figures 5A and 5B show the pipe section 1 of the third embodiment including the outlet portion 19 of the second embodiment, it will be appreciated that the inlet portion 13 of the third embodiment can be combined with the first embodiment, and the outlet portion 19 of the second embodiment may be omitted.

A proof of concept preliminary study was carried out on the various embodiments discussed above. The study was performed for a single horizontal-to-vertical 90 degree bend of 100mm radius, connected between a horizontal and a vertical pipe of 1m long each. A 2-inch (D = 50 mm) diameter stainless-steel pipe (polished to hygienic standard required for dairy, food and pharmaceuticals) was used throughout the experiments to prevent contamination of products.

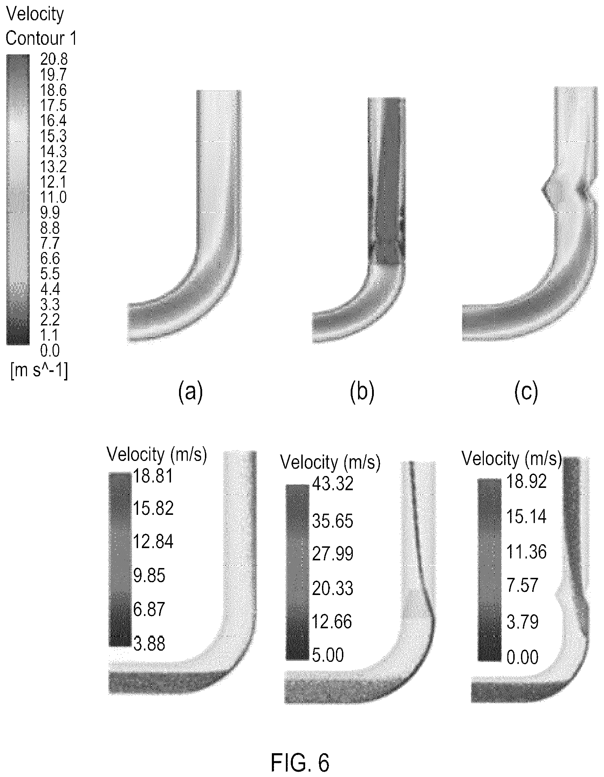

The ability of the pipe sections 1 according to embodiments of the invention to deflect the agglomerated powders 57 away from the pipe wall 3 into the middle of the passage 5 was compared qualitatively with a standard (conventional) bend using the CFD-DEM model, as shown in Figure 6.

The results show air velocity (upper plots) and particle velocity (lower plots) for: (a) a convention bend, (b) a converging nozzle (i.e. the outlet region 19 shown in Figures 3A and 3B without a deflection portion 17 upstream of it), and (c) an offset region as shown in Figure 1.The scale is the same for all air velocity plots, but separate scales are shown for each particle velocity plot.

From the results, the offset and the converging nozzles show varying degree of deflection of the agglomerations 57 away from the pipe wall.

Further analysis was performed on the offset portion 17 of Figure 1 and the outlet region 19 of Figure 2 (in the absence of an upstream deflection portion 17). The performance of these features was again compared with a state-of-the-art short-radius (conventional) bend. As can be seen, the embodiments of the invention enhance the fluidisation of the powders, resulting in improved dispersion and less particle roping.

A "dispersion index (DI)" was used, defined as the ability of a pipe section 1 to quickly disrupt/disperse the stratification or particle agglomeration formation occurring after a 90 degree bend. This was evaluated quantitatively using the standard deviation of particle volume fraction (or concentration) measured at different cross-sectional planes along the axial axis on the downstream vertical pipe after the bend. The dispersion index is given by equation 1:

$$DI = \frac{1}{\varphi_p}\left[\frac{1}{n-1}\sum_{k=1}^{n}\left(\varphi_k - \varphi_p\right)^2\right]^{1/2} \qquad (1)$$

$\varphi_p =$      *mean particle volume fraction in cross - section*
$\varphi_k =$      *particle volume fraction at equally spaced radial locations in x - direction*
n =      total number of measurement points

For further information see [1] Bilirgen, H., Levy, E.K., Mixing and Dispersion of Particle Ropes in Lean Phase Pneumatic Conveying. J. Powder Technol. 119 (2001) 134-152.

Equation 1 shows that the higher the fraction of the deviation within a short axial distance from the bend exit, the better the dispersion efficiency of the flow aids.

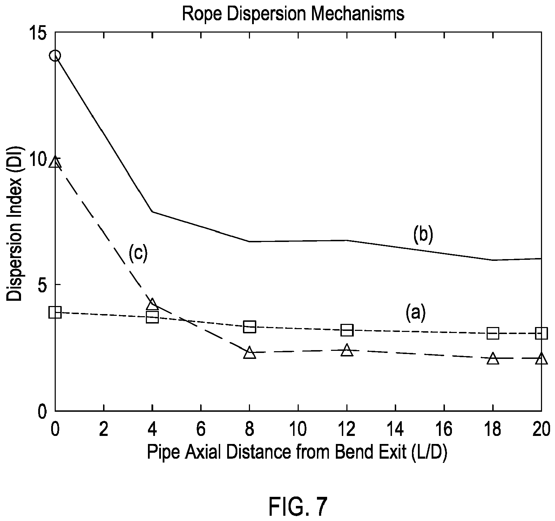

Figure 7 shows the dispersion index for (a) a conventional bend, (b) the pipe section 1 of Figure 1 having a deflection portion 17 only, and (c) an outlet portion 17 as shown in Figure 3 only, without a deflection portion 15 upstream of it. The distance (x axis) provides the length L as a function of the diameter D of the pipe section 1.

The embodiment of Figures 3A and 3B combines the dispersion efficiency of deflection portion 17, and re-acceleration efficiency of the outlet portion 19.

The embodiments discussed above are given by way of example only.

In the examples shown above, the deflection portion 17, tapering region 67 of the second embodiment, and expanding and reducing sub-portions 13a,13b of the third embodiment are formed by changing direction of a boundary wall 3. However, it will be appreciated that this may be achieved by variations in the thickness of the pipe wall 3 or by inserts or other formations in the passage 5.

In the examples shown, the bend 29 is a 90 degree bend, however, the bend 29 may have any suitable angle.

It will be appreciated that in some examples, the straight section 55 between the corner portion 15 and the deflection portion 17 may be omitted, and the corner portion 15 may extend straight into the deflection portion 17. In such embodiments, the centreline 23 at the downstream end 33 of the corner portion 15 may only be along the second axis 35 at a single point.

In general, the upstream end 41 of the deflection portion is within 2D of the downstream end 33 of the corner portion, where D is the diameter of the boundary wall 3 (i.e. 2D or less).

The straight region 69 between the deflection portion 17 and tapering region 67 is generally minimised, and is provided to allow the tapering region 67 to be joined to the deflection portion 17, although a short straight portion 67 may be accommodated. In some embodiment, the deflection portion 17 may open straight into the tapered region 67.

In the example shown in Figures 5A and 5B, the second sub region 13b extends straight into the corner portion 15. However, a straight portion may be provided between the two. Likewise, a straight portion may be provided at the inlet 9 of the inlet portion 13. Again, the spacing between the second sub-region 13b and the corner portion 15 should be 2D or less.

In the deflection portion 13 shown in Figures 1 to 5, the sub-portions 17a,b are cylindrical, with straight sidewalls. However, it will be appreciated that the deflection portion may have any suitable shape, for example curves. Furthermore, the second sub-region 17b may comprise a step change in the diameter, rather than a gradual change.

In the outlet portion shown in Figures 3 to 5, the tapering region may have any suitable shape to provide desired acceleration. In the examples shown the outer side of the wall 3' extends parallel to the second axis 35, but this need not necessarily be the case, and the outer wall 3' may also taper.

In the example shown, the tapering is asymmetric around the second axis 35, with a larger taper on the inner side 39. As such, the outlet portion is considered to be eccentric. However, it will be appreciated that the outlet portion may be symmetric ("concentric").

In the example shown in Figures 3 to 5, the passage 5 widens after the tapering region 67 at the connection to the downstream pipe 63. However, it will be appreciated that the outlet portion 19 may also include either a gradual or step change increase in the diameter of the passage 5.

In the example shown in Figures 3A and 3B, the deflection portion 17 and tapering region 67 are arranged such that the centreline 23e in the downstream pipe 63 is offset from the second axis 35. However, this need no necessarily be the case, and the centreline may extend along the second axis 35 at both the outlet of the corner portion 15 and the outlet 11 of the pipe section 1.

The inlet portion 13 shown in Figures 5A and 5B may have any suitable shape to achieve the desired flow conditioning. In the example shown, the outer side 37 of the boundary wall, is parallel to the first axis 21, but this need not necessarily be the case.

In the example shown in Figures 5A and 5B, the inlet portion 13 is symmetric about a plane perpendicular to the first axis 21, through the waist 71, however, this not necessarily be the case. Furthermore, the inlet portion 13 is asymmetric around the first axis 21 (i.e. eccentric), but this need not necessarily be the case.

In the examples discussed above, flanges 59, 61 are used to couple the pipe section 1 to upstream and downstream sections in a conveying system, however, any suitable connection system may be used, as will be appreciated by the person skilled in the art.

In the examples discussed above, the boundary wall 3 is generally circular in cross section, unless stated otherwise. However, it will be appreciated that the wall 3 may be any suitable cross section.

Furthermore, the section may be applied to any suitable radius corner.

In the above embodiments, the deflection portion 17 provides a flow conditioner downstream of the corner portion 15. The flow conditioner is able to deflect agglomerated powder from the wall 3 of the pipe section 1, and break up the flow.

Furthermore, in the outlet portion 19 of the second embodiment, the redispersed powder 7 is accelerated. It will be appreciated that any suitable accelerator may be used, using for example, air pressure or the like.

The inlet portion 13 of the third embodiment provides a flow conditioner upstream of the corner portion 15, to reduce the impact of powder 7 on the wall 3 at the corner. This in turn reduces the amount particles agglomerate. Any other suitable flow conditioner may also be provided.

The pipe section 1 may be used to carry any suitable powder, and has particular applicability for cohesive powders.

In the above, CFD/DEM modelling of the particles is used to illustrate the effect of the embodiments of the pipe section 1 on particles of powder 7. The model is based on an understanding of: (i) particle-particle (P-P), particle-fluid (P-F), and particle-equipment (P-W) interactions; (ii) the operating conditions and conveying characteristics; (iii) and a comprehensive flow property characterization of cohesive powders; to develop a validated CFD-DEM model framework as detailed in [2] Olaleye, A.K, Shardt, O., Walker, G.M., Van den Akker, H.E.A., Pneumatic Conveying of Cohesive Dairy Powders: Experiments and CFD-DEM Simulations. J. Powder Tech. (Oct. 2019) https://doi.org/10.1016/j.powtec.2019.09.046. The modelling was performed using a pilot-scale conveying test rig to convey cohesive dairy powder such as fines of fat-filled milk powder.

The references [1] and [2] cited herein are hereby incorporated by reference.

**Claims**

1. A pipe section (1) for carrying cohesive powders, the pipe section (1) formed of a boundary wall (3) defining a passage (5) and including a plurality of pipe portions (13, 15, 17, 19), the pipe portions (13, 15, 17, 19) comprising, in series:

   an inlet portion (13) in which the passage (5) substantially extends along a first axis (21);
   a corner portion (15) defining a bend (29) within which the passage (5) turns from extending along the first axis (21), to extending along a second axis (35) different to the first axis (21), the corner portion (15) defining an inner side (39) of the bend (29) and an opposing outer side (37) of the bend (29);
   a deflection portion (17) to disperse agglomerations (57) of powder (7) formed in the passage (5) at the corner portion (15) by directing agglomerated material (57) from the outer side (37) of the bend (29) towards the centre of the passage (5); and
   an outlet portion (19) substantially extending along the second axis (35).

2. The pipe section (1) as claimed in claim 1, wherein the deflection portion (17) comprises a first sub-portion (17a) in which the passage (5) deviates from extending along the second axis (35), in a direction away from the outer side (37) of the bend (29).

3. The pipe section (1) as claimed in claim 2, wherein an angle (47) between a centreline (23c') of the passage (5) in the first sub-portion (17a) and the second axis (35) is between 15 degrees and 45 degrees, preferably between 15 degrees and 25 degrees.

4. The pipe section (1) as claimed in claim 2 or claim 3, wherein the deflection portion (17) comprises a second sub-portion (17b), in series after the first sub-portion (17a), in which a centreline (23c") of the passage (5) returns to the second axis (35).

5. The pipe section (1) of claim 4, wherein an angle between the centreline (23c") of the passage (5) in the second sub-portion (17b) and the second axis (35) is between 15 degrees and 45 degrees, preferably between 15 degrees and 25 degrees.

6. The pipe section (1) of any preceding claim, wherein the outlet portion (19) comprises a tapering region (67) having a reducing diameter away from the deflection portion (17).

7. The pipe section (1) of claim 7, wherein the tapering region (67) is rotationally asymmetric around the second axis (35).

8. The pipe section (1) of claim 7 or claim 8, wherein in the tapering region (67) an outer portion (3') of the boundary wall (3), extending from the outer side (37) of the bend (29), extends parallel to the second axis (35), optionally wherein in the tapering region (67), an inner portion (3") of the boundary wall (3), extending from the inner side (39) of the bend (29), extends towards the second axis (35) as it extends away from the deflection portion (17).

9. The pipe section (1) of claim 7 or claim 8, wherein a centreline (23d) of the passage (5) in the tapering region (67) extends in a direction away from the inner side (39) of the bend (29).

10. The pipe section (1) of any of claims 6 to 9, wherein the tapering region (67) comprises a first diameter at a first end (51), and a second diameter at an opposing second end (53) positioned in series after the first end (51), wherein the ratio of the second diameter to the first diameter is between 0.5 and 0.9.

11. The pipe section (1) of claim 10, wherein the ratio of the length of the tapering region (67) parallel to the second axis (35) to the first diameter is between 1.5 and 1.8.

12. The pipe section (1) of any preceding claim wherein the inlet portion (13) comprises a first sub-portion (13a) in which the diameter of the passage (5) increases as the passage (5) extends along the first axis (21), and a second sub-portion (13b), extending between the first sub-portion (13a) and the corner portion (15), in which the diameter of the passage (5) reduces as the passage (5) extends along the first axis (21).

13. The pipe section (1) of claim 12, wherein the diameter of passage (5) in the inlet portion (13) at the start of the first sub-portion (13a), in series, is the same as the diameter of the passage (5) at the end of the second sub-portion (13b), in series.

14. The pipe section (1) of claim 12 or claim 13, wherein the inlet portion (13) is asymmetric about the first axis (21).

15. The pipe section (1) of claim 14, wherein a distance between an inner portion (3") of the boundary wall (3) and the first axis (21) varies along the inlet portion (13), and an outer portion (3") of the boundary wall (3) extends parallel to the first axis (21) along the inlet portion (13).

FIG. 1

FIG. 2

FIG. 3A

FIG. 3B

FIG. 4

FIG. 5A

FIG. 5B

FIG. 6

FIG. 7

Europäisches
Patentamt

European
Patent Office

Office européen
des brevets

# EUROPEAN SEARCH REPORT

Application Number

EP 19 21 8890

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 729 880 A (MIAG MUEHLENBAU & IND GMBH) 11 May 1955 (1955-05-11) | 1-3 | INV. B65G53/52 |
| Y | * page 1, line 65 - line 70; figure 2 * | 4-11 | |
| X | JP 2002 265052 A (NIPPON STEEL CORP) 18 September 2002 (2002-09-18) * abstract; figures 1,6 * | 1-3 | |
| Y | EP 1 885 635 A1 (GAIM LTD [GB]) 13 February 2008 (2008-02-13) * figure 1b * | 4,5 | |
| Y | US 9 493 314 B2 (DOIG SCOTT [AU]) 15 November 2016 (2016-11-15) * figure 5 * | 6-11 | |

TECHNICAL FIELDS
SEARCHED     (IPC)

B65G

The present search report has been drawn up for all claims

| Place of search | Date of completion of the search | Examiner |
|---|---|---|
| The Hague | 24 June 2020 | Schneider, Marc |

EPO FORM 1503 03.82 (P04C01)

## ANNEX TO THE EUROPEAN SEARCH REPORT
## ON EUROPEAN PATENT APPLICATION NO.

EP 19 21 8890

This annex lists the patent family members relating to the patent documents cited in the above-mentioned European search report.
The members are as contained in the European Patent Office EDP file on
The European Patent Office is in no way liable for these particulars which are merely given for the purpose of information.

24-06-2020

| Patent document cited in search report | | Publication date | Patent family member(s) | | Publication date |
|---|---|---|---|---|---|
| GB 729880 | A | 11-05-1955 | NONE | | |
| JP 2002265052 | A | 18-09-2002 | JP | 4199429 B2 | 17-12-2008 |
| | | | JP | 2002265052 A | 18-09-2002 |
| EP 1885635 | A1 | 13-02-2008 | AT | 525317 T | 15-10-2011 |
| | | | CA | 2608204 A1 | 16-11-2006 |
| | | | DK | 1885635 T3 | 09-01-2012 |
| | | | EP | 1885635 A1 | 13-02-2008 |
| | | | ES | 2395195 T3 | 11-02-2013 |
| | | | GB | 2425971 A | 15-11-2006 |
| | | | PL | 1885635 T3 | 29-02-2012 |
| | | | PT | 1885635 E | 12-10-2011 |
| | | | US | 2008210325 A1 | 04-09-2008 |
| | | | WO | 2006120457 A1 | 16-11-2006 |
| | | | ZA | 200710323 B | 26-08-2009 |
| US 9493314 | B2 | 15-11-2016 | AP | 3111 A | 31-01-2015 |
| | | | AU | 2010207875 A1 | 04-08-2011 |
| | | | BR | PI1007357 A2 | 10-02-2016 |
| | | | CA | 2749369 A1 | 05-08-2010 |
| | | | CL | 2011001746 A1 | 14-10-2011 |
| | | | CN | 102301174 A | 28-12-2011 |
| | | | EA | 201101115 A1 | 30-03-2012 |
| | | | EP | 2382416 A1 | 02-11-2011 |
| | | | JP | 5732405 B2 | 10-06-2015 |
| | | | JP | 2012516413 A | 19-07-2012 |
| | | | KR | 20110117196 A | 26-10-2011 |
| | | | MX | 346197 B | 10-03-2017 |
| | | | MY | 159761 A | 31-01-2017 |
| | | | NZ | 594423 A | 29-11-2013 |
| | | | PE | 20120610 A1 | 23-05-2012 |
| | | | US | 2012007354 A1 | 12-01-2012 |
| | | | WO | 2010085839 A1 | 05-08-2010 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **BILIRGEN, H. ; LEVY, E.K.** Mixing and Dispersion of Particle Ropes in Lean Phase Pneumatic Conveying. *J. Powder Technol.,* 2001, vol. 119, 134-152

- **OLALEYE, A.K ; SHARDT, O. ; WALKER, G.M. ; VAN DEN AKKER, H.E.A.** Pneumatic Conveying of Cohesive Dairy Powders: Experiments and CFD-DEM Simulations. *J. Powder Tech.,* October 2019, https://doi.org/10.1016/j.powtec.2019.09.046